**Europäisches Patentamt**

**European Patent Office**

**Office européen des brevets**

(19)

(11) Veröffentlichungsnummer : **0 624 294 B1**

(12) # EUROPÄISCHE PATENTSCHRIFT

(45) Veröffentlichungstag der Patentschrift :
**08.11.95 Patentblatt 95/45**

(51) Int. Cl.$^6$ : **H04L 1/00**

(21) Anmeldenummer : **93902071.5**

(22) Anmeldetag : **26.01.93**

(86) Internationale Anmeldenummer :
**PCT/DE93/00082**

(87) Internationale Veröffentlichungsnummer :
**WO 93/15574 05.08.93 Gazette 93/19**

(54) **DECODIERUNG DURCH KREUZKORRELATION EINER DURCH ZYKLISCHE VERSCHIEBUNG UND INVERTIERUNG CODIERTEN DATENFOLGE.**

(30) Priorität : **31.01.92 DE 4203301**

(43) Veröffentlichungstag der Anmeldung :
**17.11.94 Patentblatt 94/46**

(45) Bekanntmachung des Hinweises auf die
Patenterteilung :
**08.11.95 Patentblatt 95/45**

(84) Benannte Vertragsstaaten :
**AT BE CH ES FR GB GR IT LI NL SE**

(56) Entgegenhaltungen :
**TELCOM REPORT Bd. 14, Nr. 2, 1991, MÜNCHEN, DE; Seiten 104-107; A.WOLF: 'Messpräzision auf breitem Band'**
**NTZ Bd. 44, Nr. 8, 1991, BERLIN, DE; Seiten 548-557; A.WOLF: 'Bitfehler- Strukturanalyse in der Breitband-ISDN-Messtechnik'**

(73) Patentinhaber : **SIEMENS AKTIENGESELLSCHAFT**
**Wittelsbacherplatz 2**
**D-80333 München (DE)**

(72) Erfinder : **WOLF, Andreas, Dr.**
**Menzelstrasse 23-24**
**D-12157 Berlin (DE)**

EP 0 624 294 B1

## Beschreibung

Die Erfindung bezieht sich auf ein Verfahren zum Wiedergewinnen von über eine Übertragungsstrecke für digitale Datenströme vom sendeseitigen zum empfangsseitigen Ende übertragenen Daten am empfangsseitigen Ende,

- bei dem die verschiedenen Daten am sendeseitigen Ende der Übertragungsstrecke mittels eines durch einen Kodewort- Generator erzeugten binären Kodewortes, das autokorreliert einen Dirac-Impuls ergibt, und mittels durch den KodewortGenerator durch zyklisches Verschieben seines einen Kodewortes erzeugten weiteren binären Kodewörtern sowie daraus durch Invertieren gewonnenen Inverskodewörtern kodiert werden und

- bei dem auf der Empfangsseite der Übertragungsstrecke zur Dekodierung mittels eines Kreuzkorrelators eine Kreuzkorrelation des jeweils empfangenen Kodewortes unter Auswertung der relativen Lage und des Vorzeichens des Hauptmaximums der jeweiligen Kreuzkorrelationsfunktion zum Wiedergewinnen der Daten vorgenommen wird.

Bei einem bekannten Verfahren dieser Art ("telcom report" 14 (1991), Heft 2, Seiten 104 bis 107) wird als binäres Kodewort eine $2^5$-m-Sequenz verwendet, die autokorreliert idealerweise einen Dirac-Impuls ergibt. Aus der $2^5$-m-Sequenz sind durch zyklisches Verschieben weitere binäre Kodewörter erzeugt, die sich jeweils voneinander durch unterschiedliche Phasen auszeichnen. Dadurch lassen sich sendeseitig 31 verschiedene Datenwörter kodieren und somit 4-Bit-Datenwörter kodieren; 5-Bit-Datenwörter sind nicht kodierbar, weil nur 31 Kodewörter zur Verfügung stehen. Eine hinsichtlich der Anzahl der kodierbaren Datenwörter verbesserte Ausführungsform des bekannten Verfahrens besteht darin, daß auf der Sendeseite zusätzlich zur Kodierung invertierte binäre $2^5$-m-Sequenzen eingesetzt werden. Dadurch besteht grundsätzlich die Möglichkeit, maximal weitere 31 verschiedene Datenwörter zu kodieren. Insgesamt sind damit 5-Bit-Datenwörter übertragbar und auf der Empfangsseite mittels Kreuzkorrelation trotz Störungen auf der Übertragungsstrecke wiedergewinnbar, sofern nicht mehr als 7 Bitfehler bei der Übertragung auftreten.

Der Erfindung liegt die Aufgabe zugrunde, das eingangs beschriebene Verfahren so auszugestalten, daß ein sicheres Wiedergewinnen einer vergleichsweise hohen Anzahl von sendeseitig vorliegenden Daten auf der Empfangsseite möglich ist.

Zur Lösung dieser Aufgabe wird erfindungsgemäß

- sendeseitig ein weiterer Kodewortvorrat verwendet, dessen durch einen weiteren Kodewort-Generator erzeugtes eines Kodewort autokorreliert einen Dirac-Impuls ergibt, dessen weitere binäre Kodewörter durch zyklisches Verschieben seines einen Kodewortes und dessen Inverskodewörter durch Invertieren erzeugt sind,

  - wobei der weitere Kodewort-Generator durch ein Generatorpolynom desselben Grades beschreibbar ist wie der eine Kodewort-Generator,

- werden eine Anzahl von Daten mit Datenpolynomen siebten Grades kodiert, indem daraus gebildeten Datenpolynomen mit den jeweils fünf niedrigsten Binärstellen des Daten polynoms siebten Grades die Kodewörter der beiden Kodewort-Generatoren in Abhängigkeit von zwei Wertekombinationen der beiden höchsten Binärstellen des Datenpolynoms siebten Grades zugeordnet werden,

- werden eine weitere Anzahl der Daten mit Datenpolynomen siebten Grades kodiert, indem daraus gebildeten Datenpolynomen mit den jeweils fünf niedrigsten Binärstellen des Datenpolynoms siebten Grades die Inverskodewörter der beiden Kodewort-Generatoren in Abhängigkeit von zwei weiteren Wertekombinnationen der beiden höchsten Binärstellen des Datenpolynoms siebten Grades zugeordnet werden, und

- werden eine zusätzliche Anzahl der Daten mit Datenpolynomen siebten Grades kodiert, indem daraus gebildeten Datenpolynomen mit jeweils Null an den fünf niedrigsten Binärstellen des Datenpolynoms siebten Grades Kodewörter eines zusätzlichen Kodewortvorrats in Abhängigkeit von vier Wertekombinationen der beiden höchsten Binärstellen des Datenpolynoms siebten Grades zugeordnet werden,

  - wobei der zusätzliche Kodewortvorrat mittels eines hinsichtlich des Grades seines Generatorpolynoms und seiner Kodewörter mit den beiden anderen Kodewort-Generatoren übereinstimmenden zusätzlichen Kodewort-Generator erzeugt ist,

- empfangsseitig mittels eines weiteren und eines zusätzlichen Kreuzkorrelators mit jeweils verschiedenen Korrelationsreferenzen drei Kreuzkorrelationsfunktionen gebildet und auf die Höhe der Beträge ihrer Hauptmaxima untersucht werden und

- bei einer oberhalb eines vorgegebenen Wertes liegenden Höhe des Betrages eines Hauptmaximums dessen relative Lage ermittelt und daraus unter Berücksichtigung des Vorzeichens des jeweiligen Hauptmaximums das jeweils übertragene Datum gewonnen wird.

Ein wesentlicher Vorteil des erfindungsgemäßen Verfahrens besteht darin, daß bei ihm mehr als doppelt so viele Kodewörter sendeseitig zur Verfügung gestellt werden wie bei dem bekannten Verfahren. Allerdings ist dabei in Kauf zu nehmen, daß die Bitfehler-Anzahl den Wert 5 nicht überschreiten darf, wenn auf der Empfangsseite durch Kreuzkorrelation das sichere Wiedergewinnen der sendeseitig auf die Übertragungsstrecke gegebenen Daten gewährleistet sein soll.

Bei dem erfindungsgemäßen Verfahren können die Kodewörter des zusätzlichen Kodevorrats in unterschiedlicher Weise gebildet werden. Beispielsweise ist es möglich, vier verschiedene der durch zyklisches Verschieben des einen binären Kodewortes des zusätzlichen Kodewort-Generators erzeugte Kodewörter zu verwenden. Als besonders vorteilhaft wird es jedoch angesehen, wenn zwei Kodewörter des zusätzlichen Kodevorrats benutzt werden und die weiteren Kodewörter daraus durch Invertieren gebildet werden.

Wie auch bei dem eingangs beschriebenen, bekannten Verfahren ist es auch bei dem erfindungsgemäßen Verfahren in vorteilhafter Weise möglich, die Höhe der Hauptmaxima der Kreuzkorrelationsfunktionen als Maß für die Bitfehler-Anzahl auszuwerten.

Zur Erläuterung der Erfindung ist in

Figur 1        ein Ausführungsbeispiel eines zur Erzeugung eines Kodewortes für das erfindungsgemäße Verfahren geeigneten Schieberegister, in

Figur 2        Darstellung eines binären Kodewortes, in

Figur 3        durch zyklisches Verschieben des einen binären Kodewortes gewinnbare weitere Kodewörter, in

Figur 4        ein Ausführungsbeispiel eines bipolaren Kodierers, in

Figur 5        eine Tabelle zur Veranschaulichung der Kodierung bzw. Dekodierung, in

Figur 6        ein Ausführungsbeispiel einer Anordnung zur Durchführung des erfindungsgemäßen Verfahrens, in

Figur 7        der Verlauf einer Kreuzkorrelationsfunktion und in

Figur 8        die Verläufe von drei Kreuzkorrelationsfunktionen dargestellt.

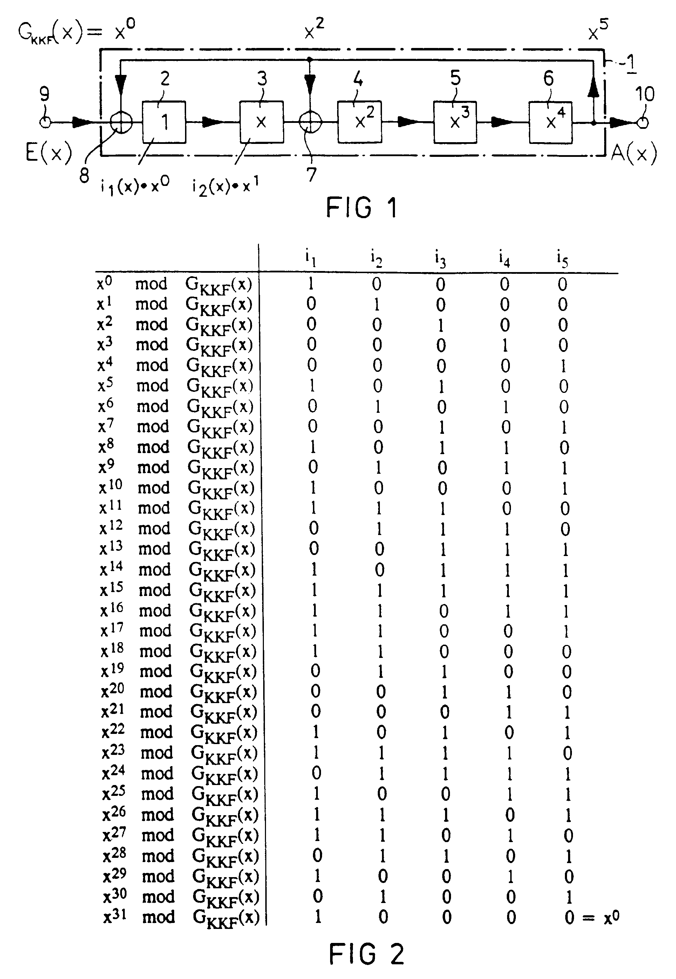

In Figur 1 ist ein Schieberegister 1 dargestellt, das fünf Stufen 2, 3, 4, 5 und 6 enthält, die im dargestellten Ausführungsbeispiel jeweils von einem D-Flip-Flop gebildet sind. Das Schieberegister 1 ist in der aus der Figur 1 ersichtlichen Weise rückgekoppelt, wobei zwischen den Stufen 3 und 4 ein Exklusiv-ODER-Glied 7 angeordnet ist; ein weiteres Exklusiv- ODER-Glied 8 ist der Stufe 2 vorgeordnet. Diese Rückkopplung ist durch ein Generatorpolynom $G_{KKF}(x)$ beschreibbar:

$$G_{KKF}(x) = x^0 + x^2 + x^5 = x^5 + x^2 + 1 \quad (1)$$

Dieses Generatorpolynom $G_{KKF}(x)$ ist ein sogenanntes irreduzibles Polynom mit dem Grad $g = 5$. Die Periode einer hiermit erzeugbaren $2^5$-m-Sequenz beträgt $2^g - 1 = 31$.

Das Schieberegister 1 ist an einem Eingang 9 mit einer Eingangsfolge $E(x)$ beaufschlagbar; an einem Ausgang 10 ist eine binäre Ausgangsfolge $A(x)$ abnehmbar. Das Ausgangssignal $A(x)$ ist mit dem Eingangssignal $E(x)$ und dem Generatorpolynom $G_{KKF}(x)$ durch

$$A(x) = E(x) / G_{KKF}(x) \quad (2)$$

beschrieben.

Die ersten 31 Werte des Ausgangssignals $A(x)$ bei einer Stimulanz mit einer Eingangsfolge $E(x) = x^{31}$, was eine 100 ... 00 Folge ist, wird durch die Polynomdivision

$$A(x) = x^{31}:(x^5 + x^2 + 1) = (x^{26} + x^{23} + x^{21} + x^{20} + x^{17} + x^{16} + x^{15} + x^{14} + x^{13} + x^9 + x^8 + x^6 + x^5 +$$
$$x^4 + x^2 + 1) + 1/(x^5 + x^2 + 1)$$
$$\text{mit} \quad 1/(x^5 + x^2 + 1) = R(x)/G_{KKF}(x) \quad (3)$$

bestimmt, deren Ergebnis mit der Zahlenfolge $c_0(n)$ einer $2^5$-m-Sequenz identisch ist:

$$C_0(n) = \{0000100101100111110001101110101\} \quad (4)$$

Der Divisionsrest $R(x)$, der übrigens gleich mit dem Inhalt $I(x)$ der fünf Stufen 2 bis 6 nach 31 Takten ist, deutet auf das periodische Verhalten des $2^5$-m-Sequenz-Generators hin. Diese Zahlenfolge $c_0(n)$ wird - wie nachstehend noch erläutert wird - als ein Kodewort $c_0(n)$ bei dem erfindungsgemäßen Verfahren benutzt.

Wählt man als Eingangssignal $x^{31} + 1$, ergibt sich

$$A(x) = (x^{31} + 1) : (x^5 + x^2 + 1) = H_{KKF}(x) = (x^{26} + x^{23} + x^{21} + x^{20} + x^{17} + x^{16} + x^{15} + x^{14} + x^{13} +$$
$$x^9 + x^8 + x^6 + x^5 + x^4 + x^2 + 1) \quad (5)$$

das zu $G_{KKF}(x)$ orthogonale Polynom $H_{KKF}(x)$ als Ausgangssignal, welches nur eine Periode der $2^5$-m-Sequenz repräsentiert und damit die Polynomendarstellung von $c_0(n)$ ist.

Nur zum besseren Verständnis sei an dieser Stelle eingefügt, daß sich in der üblichen Darstellung das Ausgangssignal des Schieberegisters aus der Tabelle in Figur 2 entnehmen läßt, die unter Berücksichtigung der Tatsache aufgestellt worden ist, daß sich die Inhalte der einzelnen Stufen 2 bis 6 des Schieberegisters nach Figur 1 durch das Polynom $I(x)$ beschreiben lassen:

$$I(x) = x^4 \cdot i_5 + x^3 \cdot i_4 + x^2 \cdot i_3 + x^1 \cdot i_2 + x^0 \cdot i_1 \quad (6)$$

oder allgemein durch die Beziehung (7)

$$x^i \bmod G_{KKF}(x), \quad (7)$$

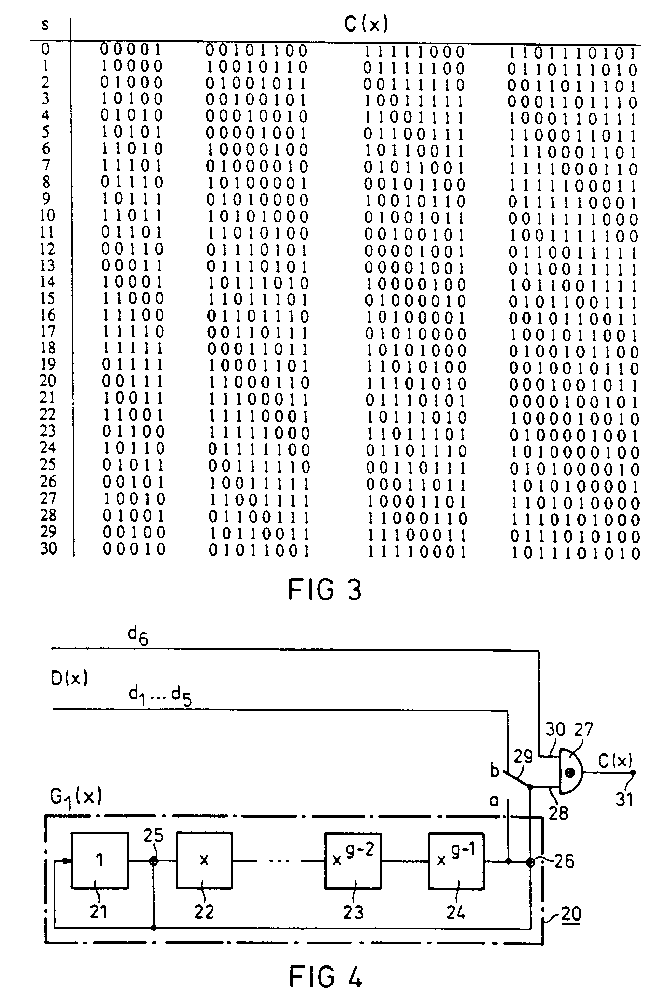

wenn für i = 0 in der ersten Stufe 2 eine "1" eingeschrieben und E(x) = 0 wird. Ab $x^{31}$ wiederholen sich die Zustände in den einzelnen Stufen aufgrund der Periode von 31 der $2^5$-m-Sequenz. Der Inhalt $i_5$ des Registers 6 gibt die $2^5$-m-Sequenz bzw. $c_0(n)$ als binäre Zahlenfolge an. Wird das Kodewort $c_0(n)$ gemäß Gleichung (4) bzw. gemäß Gleichung (5) zyklisch verschoben, dann erhält man 31 - hinsichtlich ihrer Phase s - verschiedene Kodewörter C(x), wie Figur 3 zu entnehmen ist. Diese verschiedenen Kodewörter C(x) lassen sich durch folgende Gleichung (8) beschreiben:

$$C_s(x) = [x^s \cdot H_{KKF}(x)] \bmod (x^{31} + 1) \quad (8)$$

Diese Kodewörter haben eine Länge von 31 und ermöglichen 31 unterschiedliche Phasenlagen s der $2^5$-m-Sequenz, so daß auf diese Weise 31 unterschiedliche Kodewörter verfügbar sind.

Zur näheren Erläuterung der Gleichung (8) ist allgemein anzumerken, daß zyklische Kodes als Charakteristikum ein irreduzibles Generatorpolynom G(x) mit dem Grad g haben. Kodeworte C(x) allgemein werden nun so erzeugt, daß einem Datenwort D(x) die sogenannte zyklische Ergänzung R(x) angehängt wird, so daß das Kodewortpolynom C(x) durch G(x) restfrei dividierbar ist. Hierzu wird zuerst D(x) mit $x^g$ multipliziert und dann R(x) mittels der Division von $D(x) \cdot x^g$ durch G(x) erhalten. R(x) besitzt den Grad g-1 und ist somit genau g Stellen lang. Die erhaltenen Kodewörter sind durch

$$C(x) = x^g \cdot D(x) + R(x) \quad (9)$$

beschrieben. Dieses Kodewort ist dann restfrei durch G(x) teilbar. Es gilt daher

$$\frac{C(x)}{G(x)} = \frac{x^g \cdot D(x) + R(x)}{G(x)} = E(x), \quad (10)$$

woraus man

$$x^g \cdot D(x)/G(x) = E(x) + [R(x)/G(x)] \quad (11)$$

bzw.

$$R(x) = [x^g \cdot D(x)] \bmod G(x) \quad (12)$$

erhält. Die zyklische Ergänzung läßt sich nun gewinnen, indem man in G1.(12) für D(x) einen Datenwert einsetzt und diesen durch G(x) dividiert. Das Ergebnis läßt sich dann in den Ergebniskoeffizienten E(x) und den verbleibenden Rest R(x) separieren. Wesentlich für die Kodewortberechnung ist nur das Ergebnis für R(x) in der G1.(11) bzw.(12); E(x) besitzt hingegen keine Bedeutung für das Kodewort.

Der Vorrat an insgesamt 31 Kodewörtern läßt sich durch Invertieren unter Gewinnen von 31 Inverskodewörtern verdoppeln, wenn ein bipolarer Kodierer verwendet wird, wie er in Figur 4 dargestellt ist. Der hier dargestellte Kodewort-Generator weist ein rückgekoppeltes Schieberegister 20 mit dem Generatorpolynom $G_1(x)$ mit mehreren Stufen 21 bis 24 (insgesamt 26 Stufen) und Exklusiv-ODER-Gliedern 25 und 26 auf. Dem Schieberegister 20 ist ein weiteres Exklusiv-ODER-Glied 27 nachgeordnet, indem es mit einem Eingang 28 direkt an den Eingang des Exklusiv-ODER-Gliedes 26 angeschlossen ist und über einen Umschaltkontakt 29 in dessen Stellung a mit dem Ausgang der Stufe 24 verbindbar ist. In der Stellung b des Umschaltkontaktes 29 ist der eine Eingang 28 mit den Signalen der unteren fünf Stellen $d_1$ bis $d_5$ eines Datenwortes D(x) beaufschlagt. Der weitere Eingang 30 des weiteren Exklusiv-ODER-Gliedes 27 ist mit dem Signal der obersten (sechsten) Stelle des Datenwortes D(x) beaufschlagt. Die sechste Stelle steuert die Invertierung, so daß hier 62 verschiedene Kodewörter zur Verfügung stehen, wenn weiterhin von einer $2^5$-m-Sequenz als Beispiel ausgegangen wird.

Die 62 verschiedenen, einen ersten Kodewörter-Vorrat bildenden Kodewörter sind somit also zur einen Hälfte mittels eines Kodewörter-Generators mit dem Generatorpolynom gemäß Gleichung (5) und zur anderen Hälfte unter Bildung von Inverskodewörtern durch Invertieren der einen Kodewörter gewonnen.

Es dürfte nach den vorangehenden Ausführungen verständlich sein, daß sich ein weiterer Kodewörter-Vorrat mittels eines weiteren Kodeworte-Generators mit einem Generatorpolynom $G_2(x)$ und Invertieren der so gewonnenen Kodewörter und ein zusätzlicher Kodewörter-Vorrat mittels eines zusätzlichen Kodewort-Generators mit einem Generatorpolynom $G_3(x)$ erzeugen lassen, wobei diese Polynome durch folgende Beziehungen (13) und (14) beschreibbar sind:

$$G_2(x) = (x^{31} + 1) / \theta_3(x) \quad (13)$$
$$G_3(x) = (x^{31} + 1) / \theta_5(x) \quad (14)$$

In diesen Beziehungen (13) und (14) bezeichnen $\theta_3(x)$ und $\theta_5(x)$ die irreduziblen Polynome fünften Grades:

$$\theta_3(x) = x^5 + x^4 + x^3 + x^2 + 1 \quad (15)$$
$$\theta_5(x) = x^5 + x^4 + x^2 + x + 1 \quad (16)$$

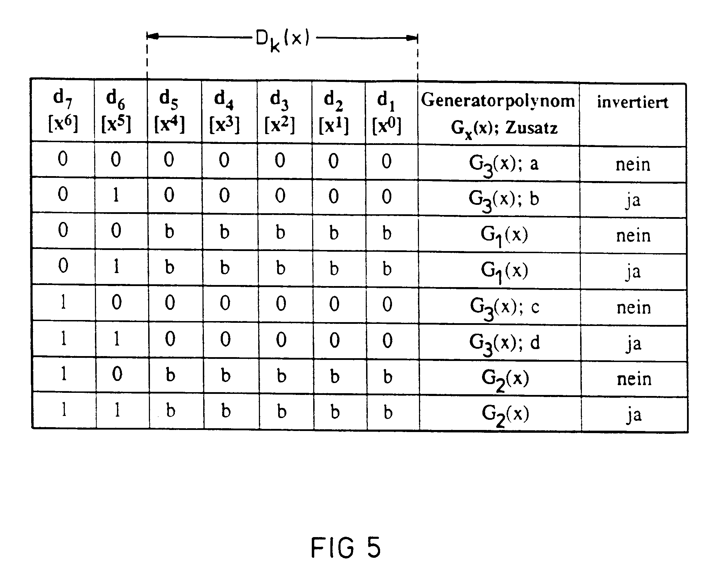

In Figur 5 ist in der dargestellten Tabelle der mit dem bipolaren Kodierer gemäß Figur 4 erzeugte Kodewörter-Vorrat C (x) durch Angabe des Generatorpolynoms $G_1(x)$ mit Hinweis auf die Invertierung beschrieben, wobei in der Figur 5 mit "b" beliebige Zustände mit "0" oder "1" gekennzeichnet sind. Der weitere Kodewörter-Vorrat ist in der Tabelle durch Angabe des Generatorpolynoms $G_2(x)$ gekennzeichnet, während $G_3(x)$ mit den Zusätzen a bis d Kodewörter des zusätzlichen Kodewörter-Vorrats angibt.

Wie Figur 5 ferner im einzelnen zu entnehmen ist, lassen sich auf diese Weise Datenwörter D(x) als zu übertragende Testdaten kodieren, die 7-Bit-Wörter mit den Binärstellen $d_1$ - $d_7$ darstellen. Dabei wird in der Weise vorgegangen, daß jeweils aus den Datenwörtern D(x) siebten Grades ein gekürztes Datenwort $D_k(x)$ fünften Grades gewonnen wird, das die fünf niedrigsten Stellen des Datenwortes D(x) siebten Grades aufweist. Diesem gekürzten Datenwort $D_k(x)$ fünften Grades werden in Abhängigkeit von der Wertekombination an den Stellen $d_6$ und $d_7$ des Datenwortes D(x) siebten Grades invertierte oder nicht invertierte Kodewörter des einen Kodewörter-Vorrats und des weiteren Kodewörter-Vorrats zugeordnet. Dadurch sind insgesamt 124 verschiedene Testdaten kodierbar. Um 7-Bit-lange Testdaten übertragen zu können, fehlen also noch vier zusätzliche Kodewörter. Diese sind in der Weise gewonnen, daß aus einem zusätzlichen Kodewörter-Vorrat wiederum in Abhängigkeit von der Wertekombination $d_6$ und $d_7$ zwei nichtinvertierte Kodewörter des Generatorpolynoms $G_3(x)$ und die Inverskodewörter dazu verwendet werden. Damit stehen insgesamt 128 Kodewörter zur Verfügung, so daß 7-Bit-lange Datenwörter übertragen werden können.

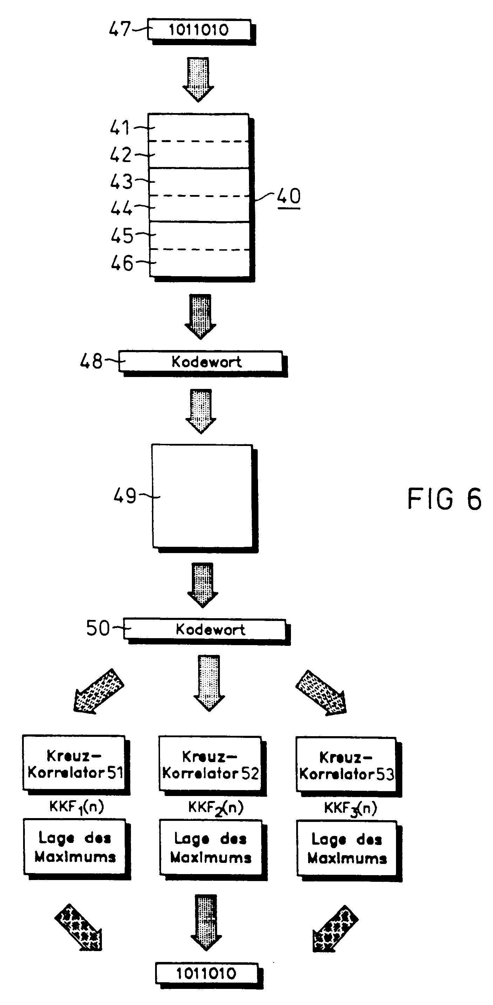

Wie Figur 6 zeigt, sind die mittels der oben beschriebenen Kodewörter-Generatoren mit den Generatorpolynomen $G_1(x)$, $G_2(x)$ und $G_3(x)$ gebildeten Kodewörter in einer Kodiereinrichtung 40 abgelegt, bei der es sich um einen adressierbaren Speicher handeln kann. Dabei befinden sich beispielsweise die nach dem Generatorpolynom $G_1(x)$ erzeugten Kodewörter an Speicherplätzen 41, deren Inverskodewörter an Speicherplätzen 42 und die nach dem Generatorpolynom $G_2(x)$ erzeugten Kodewörter an Speicherplätzen 43, deren Inverskodewörter an Speicherplätzen 44 und die zusätzlichen Kodewörter an Speicherplätzen 45 bzw. deren Inverskodewörter an Speicherplätzen 46. Im Block 47 dargestellte und zu kodierende Datenwörter werden in der Kodiereinrichtung 40 in einer Weise kodiert, wie es oben beschrieben worden ist, und als kodierte Daten (Block 48) über eine Übertragungsstrecke 49 übertragen, wo sie als kodierte, durch die Übertragungsstrecke 49 mehr oder weniger verfälschte Daten (Block 50) anstehen und drei Kreuzkorrelatoren 51, 52 und 53 zugeführt werden.

Die Kreuzkorrelatoren 51 bis 53 haben als Korrelationsreferenzen unterschiedliche $2^5$-m-Sequenzen:

$$M_1(x) = x^{26} + x^{26} \bmod G_1(x) \quad (17)$$
$$M_2(x) = x^{26} + x^{26} \bmod G_2(x) \quad (18)$$
$$M_3(x) = x^{26} + x^{26} \bmod G_3(x) \quad (19)$$

Diese Korrelationsreferenzen sind mit den Generatorpolynomen $G_1(x)$, $G_2(x)$ und $G_3(x)$ erzeugt. Der Kreuzkorrelator 51 hat somit die Korrelationsreferenz $M_1(x)$, der Kreuzkorrelator 52 die Korrelationsreferenz $M_2(x)$ und der Kreuzkorrelator 53 die Korrelationsreferenz $M_3(x)$.

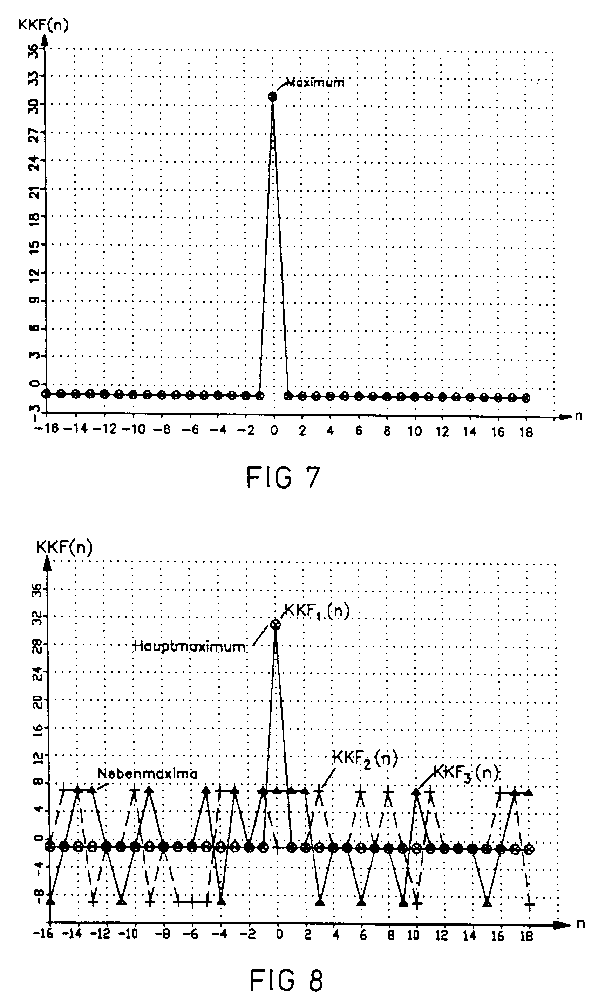

Ist das Generatorpolynom für das generierte Kodewort C'(x) identisch mit der Korrelationsreferenz, ergibt sich für die Kreuzkorrelationsfunktion KKF(n) zwischen dem Kodewort und der Korrelationsreferenz ein Funktionsverlauf mit einem Maximum der Höhe 31, wie dies in Figur 7 dargestellt ist. Der Wert "n", bei dem das Hauptmaximum in der Kreuzkorrelationsfunktion erfaßt wird, ist eindeutig der Phase s des empfangenen Kodewortes zugeordnet. Außerdem ist darauf hinzuweisen, daß sämtliche Betrachtungen zur Kreuzkorrelation hier mit einer bipolaren Zahlenfolge ausgeführt sind, in der also im Hinblick auf G1.(4) alle Werte "0" durch den Wert "-1" ersetzt sind. Für das Beispiel wurde angenommen, daß D(x) = 0 und $M_1(x)$ die Korrelationsreferenz ist. Die mit einem bestimmten Generatorpolynom erzeugten Kodeworte erzeugen nur in einem der drei Kreuzkorrelatoren ein auswertbares Maximum mit dem Wert 31. In den beiden anderen Kreuzkorrelatoren entstehen nur kleinere Maxima, wie Figur 8 zu entnehmen ist. Dabei gilt die Eindeutigkeit des Maximums im Verlauf von $kKKF_1(n)$ auch für verfälschte Kodewörter. Der Wert des Hauptmaximums in $KKF_1(n)$ sinkt um den Wert 2 und gleichzeitig steigen die Maximalwerte der Nebenmaxima in $KKF_2(n)$ und $KKF_3(n)$ maximal um den Wert 2 pro Bitfehler in dem Kodewort. Um eine maximale Fehlertoleranz bei der korrelativen Dekodierung zu erhalten, wird die Erkennungsschwelle für ein Maximum im Funktionsverlauf der Kreuzkorrelation bei

$$|KKF(n)| \geqq 21$$

gesetzt. Dies bedeutet, daß die übertragenen Kodewörter bis zu 5 Bitfehler aufweisen können, um noch richtig erkannt zu werden.

Aus der Lage des Hauptmaximums, dessen Polarität (positiv oder negativ) sowie in welchem Kreuzkorrelator es auftritt, läßt sich das Datenwort D(x) mittels eines nicht dargestellten nachgeordneten Speichers direkt bestimmen unter Benutzung der Tabelle nach Figur 5. Dabei wird beim Auftreten eines positiven Hauptmaximums im Kreuzkorrelator 51 mit der Korrelationsreferenz $M_1(x)$ bestimmt, daß C(x) mit $G_1(x)$ generiert wurde. Damit sind gemäß Figur 5 die Stellen $d_6$ bis $d_1$ des Datenwortes D(x) zu 0 bestimmt. Die Lage des Hauptmaximums bestimmt nun der Wert von $d_7$.

Wie auch bei dem eingangs beschriebenen, bekannten Verfahren kann auch bei dem erfindungsgemäßen Verfahren die Zahl der Bitfehler unter Auswertung der Höhe des Hauptmaximums in entsprechender Weise ermittelt werden.

Ferner ist noch darauf hinzuweisen, daß das erfindungsgemäße Verfahren nicht an die Verwendung von $2^5$-m-Sequenzen als Kodewörter gebunden ist, sondern daß auch mit dem Barker-Kode, der Gordon Mills and Welsh-Sequenz und dem Gold-Kode gearbeitet werden kann.

Auch ist das erfindungsgemäße Verfahren nicht darauf beschränkt, daß Kodewörter einer bestimmten Länge, eine bestimmte Anzahl von Kreuzkorrelatoren und eine bestimmte Anzahl von Generatorpolynomen verwendet wird; allerdings muß die Anzahl der Kreuzkorrelatoren mit den Generatorpolynomen übereinstimmen.

**Patentansprüche**

1. Verfahren zum Wiedergewinnen von über eine Übertragungsstrecke (49) für digitale Datenströme vom sendeseitigen zum empfangsseitigen Ende übertragenen Daten (Block 47) am empfangsseitigen Ende,
   - bei dem die verschiedenen Daten (Block 47) am sendeseitigen Ende der Übertragungsstrecke (49) mittels eines durch einen Kodewort-Generator (20) erzeugten binären Kodewortes, das autokorreliert einen Dirac-Impuls ergibt, und mittels durch den Kodewort-Generator (20) durch zyklisches Verschieben seines einen Kodewortes erzeugten weiteren binären Kodewörtern sowie daraus durch Invertieren gewonnenen Inverskodewörtern kodiert werden und
   - bei dem auf der Empfangsseite der Übertragungsstrecke (49) zur Dekodierung mittels eines Kreuzkorrelators (51) eine Kreuzkorrelation des jeweils empfangenen Kodewortes (Block 50) unter Auswertung der relativen Lage und des Vorzeichens des Hauptmaximums der jeweiligen Kreuzkorrelationsfunktion zum Wiedergewinnen der Daten vorgenommen wird,

   **dadurch gekennzeichnet**, daß
   - sendeseitig ein weiterer Kodewörter-Vorrat verwendet wird, dessen durch einen weiteren Kodewort-Generator erzeugtes eines Kodewort autokorreliert einen Dirac-Impuls ergibt, dessen weitere binäre Kodewörter durch zyklisches Verschieben seines einen Kodewortes und dessen Inverskodewörter durch Invertieren erzeugt sind,
   - wobei der weitere Kodewort-Generator durch ein Generatorpolynom ($G_2(x)$) desselben Grades beschreibbar ist wie der eine Kodewort-Generator (20),
   - eine Anzahl von Daten ($D(x)$) mit Datenpolynomen siebten Grades kodiert werden, indem daraus gebildeten Datenpolynomen ($D_K(x)$) mit den jeweils fünf niedrigsten Binärstellen des Datenpolynoms ($D(x)$) siebten Grades die Kodewörter ($G_1(x)$ nichtinvertiert; $G_2(x)$ nichtinvertiert) der beiden Kodewort-Generatoren in Abhängigkeit von zwei Wertekombinationen der beiden höchsten Binärstellen ($d_6$, $d_7$) des Datenpolynoms ($D(x)$) siebten Grades zugeordnet werden,
   - eine weitere Anzahl der Daten ($D(x)$) mit Datenpolynomen siebten Grades kodiert werden, indem daraus gebildeten Datenpolynomen ($D(x)$) mit den jeweils fünf niedrigsten Binärstellen des Datenpolynoms siebten Grades die Inverskodewörter ($G_1(x)$ invertiert; $G_2(x)$ invertiert) der beiden Kodewort-Generatoren in Abhängigkeit von zwei weiteren Wertekombinnationen der beiden höchsten Binärstellen ($d_6$, $d_7$) des Datenpolynoms ($D(x)$) siebten Grades zugeordnet werden und
   - eine zusätzliche Anzahl der Daten ($D(x)$) mit Datenpolynomen siebten Grades kodiert werden, indem daraus gebildeten Datenpolynomen mit jeweils Null an den fünf niedrigsten Binärstellen ($d_1 - d_5$) des Datenpolynoms ($D(x)$) siebten Grades Kodewörter ($G_3(x)$; a,b,c,d) eines zusätzlichen Kodewort-Vorrats in Abhängigkeit von vier Wertekombinationen der beiden höchsten Binärstellen ($d_6,d_7$) des Datenpolynoms ($D(x)$) siebten Grades zugeordnet werden,
      - wobei der zusätzliche Kodewörter-Vorrat mittels eines hinsichtlich des Grades seines Generatorpolynoms ($G_3(x)$) und seiner Kodewörter mit den beiden anderen Kodewort-Generatoren übereinstimmenden zusätzlichen Kodewort-Generator erzeugt ist,
   - empfangsseitig mittels eines weiteren und eines zusätzlichen Kreuzkorrelators (52,53) mit jeweils verschiedenen Korrelationsreferenzen ($M_2(x)$, $M_3(x)$) drei Kreuzkorrelationsfunktionen gebildet und auf die Höhe der Beträge ihrer Hauptmaxima untersucht werden und
   - bei einer oberhalb eines vorgegebenen Wertes liegenden Höhe des Betrages eines Hauptmaximums dessen relative Lage ermittelt und daraus unter Berücksichtigung des Vorzeichens des jeweiligen Hauptmaximums das jeweils übertragene Datum gewonnen wird.

2. Verfahren nach Anspruch 1,
   **dadurch gekennzeichnet**, daß
   - zum Kodieren der zusätzlichen Anzahl von Daten ($D(x)$) außer den Kodewörtern ($G_3(x)$; a,c) des zusätzlichen Kodewortvorrats durch deren Invertieren gebildete Kodewörter ($G_3(x)$; b,d) verwendet werden.

3. Verfahren nach Anspruch 1 oder 2,

**dadurch gekennzeichnet**, daß
- die Höhe der Hauptmaxima der Kreuzkorelationsfunktionen (KKF(n) als Maß für die Bitfehler-Anzahl ausgewertet wird.

## Claims

1. A process for the recovery, at the receiving end, of data items (block 47) transmitted across a transmission link (49) for digital data streams from the transmitting end to the receiving end
   - wherein the different data items (block 47) are coded at the transmitting end of the transmission link (49) by means of a binary code word which is generated by a code word generator (20) and which, auto-correlated, results in a Dirac pulse, and by means of further binary code words generated by the code word generator (20) by cyclic shifting of its one code word and inverse code words obtained therefrom by inversion and
   - wherein at the receiving end of the transmission link (49) for the purpose of decoding a cross-correlation of the respective received code word (block 50) is carried out by a cross-correlator (51) with analysis of the relative position and sign of the main maximum of the respective cross-correlation function for the recovery of the data items,
   characterised in that
   - at the transmitting end a further code word supply is used, of which the one code word, generated by a further code word generator, auto-correlated results in a Dirac pulse, and of which the further binary code words are generated by cyclic shifting of the one code word and of which the inverse code words are generated by inversion,
       - where the further code word generator can be described by a generator polynomial ($G_2(x)$) of the same degree as the first code word generator (20),
   - a number of data items ($D(x)$) with data polynomials of the seventh degree are coded in that data polynomials ($D_k(x)$) formed therefrom in each case comprising the five lowest binary digit positions of the data polynomial ($D(x)$) of the seventh degree are assigned the code words ($G_1(x)$ non-inverted; $G_2(x)$ non-inverted) of the two code words generators in dependence upon two value combinations of the two highest binary digit positions ($d_6$, $d_7$) of the data polynomial ($D(x)$) of the seventh degree,
   - a further number of the data items ($D(x)$) with data polynomials of the seventh degree are coded in that data polynomials ($D(x)$) formed therefrom in each case comprising the five lowest binary digit positions of the data polynomial of the seventh degree are assigned the inverse code words ($G_1(x)$ inverted; $G_2(x)$ inverted) of the two code word generators in dependence upon two further value combinations of the two highest binary digit positions ($d_6$, $d_7$) of the data polynomial ($D(x)$) of the seventh degree and
   - an additional number of the data items ($D(x)$) with data polynomials of the seventh degree are coded in that data polynomials formed therefrom in each case with zero at the five lowest binary digit positions ($d_1$ - $d_5$) of the data polynomial ($D(x)$) of the seventh degree are assigned code words ($G_3(x)$; a,b,c,d) of an additional code word supply in dependence upon four value combinations of the two highest binary digit positions ($d_6$, $d_7$) of the data polynomial ($D(x)$) of the seventh degree,
       - where the additional code word supply is generated by means of an additional code word generator which is identical to the two other code word generators in respect of the degree of its generator polynomial ($G_3(x)$) and its code words,
   - at the receiving end by means of a further and an additional cross-correlator (52, 53) in each case with different correlation references ($M_2(x)$, $M_3(x)$ three cross-correlation functions are formed and are investigated in respect of the value of the amounts of their main maxima and
   - in the case of a value of the amount of a main maximum lying above a given value, its relative position is determined and from this, taking into account the sign of the respective main maximum, the respective transmitted data item is obtained.

2. A process as claimed in Claim 1, characterised in that
       - for the coding of the additional number of data items ($D(x)$) in addition to the code words ($G_3(x)$; a,c) of the additional code word supply, code words ($G_3(x)$; b,d) formed by the inversion of the latter are used.

3. A process as claimed in Claim 1 or 2, characterised in that
       - the value of the main maxima of the cross-correlation functions (KKF(n) is analyzed as a gauge of the number of bit errors.

## Revendications

1. Procédé pour récupérer des données (bloc 47), transmises par l'intermédiaire d'une voie de transmission (49) pour des flux de données numériques de l'extrémité côté émission à l'extrémité côté réception, à l'extrémité côté réception, selon lequel

   - les données (bloc 47) sont codées à l'extrémité côté émission de la voie de transmission (49) au moyen d'un mot de code binaire, qui est produit par un générateur de mots de code (20), et qui donne, d'une manière autocorrélée, une impulsion de Dirac, et au moyen d'autres mots de code binaire, qui sont produits par le générateur de mots de code (20) par un décalage cyclique de l'un des mots de code de ce générateur, ainsi que de mots de code inverses qui en sont obtenu par inversion, et
   - selon lequel du côté réception de la voie de transmission (42), une corrélation croisée du mot de code reçu (bloc 50) est exécutée pour la récupération des données, pour le décodage au moyen d'un corrélateur (51) réalisant une corrélation croisée, en exploitant la position relative et le signe du maximum principal de la fonction respective de corrélation croisée
     caractérisé par le fait que
   - côté émission, on utilise une autre réserve de mots de code, dont un mot de code, produit par un autre générateur de mots de code, fournit par autocorrélation une impulsion de Dirac, et dont les autres mots de code binaires sont produits par décalage cyclique d'un mot de code de cette réserve et dont les mots de code inverses sont produits par inversion,
     - l'autre générateur de mots de code peut être décrit par un polynôme générateur ($G_2(x)$) de même degré que le premier générateur de mots de code (20),
     - un certain nombre de données ($D(x)$) sont codées par des polynômes de données du septième degré, par le fait qu'à des polynômes de données ($D_K(x)$) formés à partir de ces données et comportant les cinq positions binaires respectives les plus petites du polynôme de données ($D(x)$) du septième degré, sont associés les mots de code (($G_1(x)$ non inversé; $G_2(x)$ non inversé) des deux générateurs de mots de code en fonction des deux combinaisons de valeurs des deux positions binaires les plus grandes ($d_6$, $d_7$) du polynôme de données ($D(x)$) du septième degré,
     - un autre nombre des données ($D(x)$) sont codées par des polynômes de données du septième degré par le fait qu'à des polynômes de données ($D_K(x)$) formés à partir de ces données et comportant les cinq positions binaires respectives les plus petites du polynôme de données ($D(x)$) du septième degré, sont associés les mots de code (($G_1(x)$ non inversé; $G_2(x)$ non inversé) des deux générateurs de mots de code en fonction des deux combinaisons de valeurs des deux positions binaires les plus grandes ($d_6$, $d_7$) du polynôme de données ($D(x)$) du septième degré,
     - un nombre supplémentaire des données ($D(x)$) sont codées par des polynômes de données du septième degré par le fait qu'à des polynômes de données qui en sont formés et comportant respectivement zéro au niveau des cinq positions binaires les plus petites ($d_1$ à $d_5$) des polynômes de données ($D(x)$) du septième degré sont associés des mots de code ($G_3(x)$; a, b, c, d) d'une réserve supplémentaire de mots de code en fonction de quatre combinaisons de valeurs des deux positions binaires les plus grands ($d_6$;$d_7$) du polynôme de données ($D(x)$) du septième degré,
       - la réserve supplémentaire de mots de code étant produite au moyen d'un générateur de mots de code supplémentaire, qui coïncide, en ce qui concerne le degré de son polynôme générateur ($G_3(x)$) et de ses mots de code, avec les deux autres générateurs de mots de code,
     - côté réception, trois fonctions de corrélation croisée sont formées au moyen d'un autre corrélateur et d'un corrélateur supplémentaire (52,53) réalisant une corrélation croisée, avec des références respectivement différentes de corrélation ($M_2(x)$, $M_3(x)$), et l'amplitude des valeurs absolues de leurs maxima principaux sont exploitées, et
     - pour une amplitude de la valeur absolue d'un maximum principal, supérieure à une valeur prédéterminée, la position relative de ce maximum est déterminée et, à partir de là, la donnée respectivement transmise est obtenue en tenant compte du signe du maximum principal respectif.

2. Procédé suivant la revendication 1, caractérisé par le fait que
     - pour le codage du nombre supplémentaire de données ($D(x)$), on utilise, en plus des mots de code ($G_3(x)$; a,c) de la réserve supplémentaire de mots de code, des mots de code ($G_3(x)$; b,d) formés par inversion des mots de code précédents.

3.  Procédé suivant la revendication 1 ou 2, caractérisé par le fait que
        - l'amplitude des maxima principaux des fonctions de corrélation croisée (KKF(n)) est exploitée en tant que mesure du nombre d'erreurs sur les bits.

FIG 1

| | $i_1$ | $i_2$ | $i_3$ | $i_4$ | $i_5$ |
|---|---|---|---|---|---|
| $x^0$ mod $G_{KKF}(x)$ | 1 | 0 | 0 | 0 | 0 |
| $x^1$ mod $G_{KKF}(x)$ | 0 | 1 | 0 | 0 | 0 |
| $x^2$ mod $G_{KKF}(x)$ | 0 | 0 | 1 | 0 | 0 |
| $x^3$ mod $G_{KKF}(x)$ | 0 | 0 | 0 | 1 | 0 |
| $x^4$ mod $G_{KKF}(x)$ | 0 | 0 | 0 | 0 | 1 |
| $x^5$ mod $G_{KKF}(x)$ | 1 | 0 | 1 | 0 | 0 |
| $x^6$ mod $G_{KKF}(x)$ | 0 | 1 | 0 | 1 | 0 |
| $x^7$ mod $G_{KKF}(x)$ | 0 | 0 | 1 | 0 | 1 |
| $x^8$ mod $G_{KKF}(x)$ | 1 | 0 | 1 | 1 | 0 |
| $x^9$ mod $G_{KKF}(x)$ | 0 | 1 | 0 | 1 | 1 |
| $x^{10}$ mod $G_{KKF}(x)$ | 1 | 0 | 0 | 0 | 1 |
| $x^{11}$ mod $G_{KKF}(x)$ | 1 | 1 | 1 | 0 | 0 |
| $x^{12}$ mod $G_{KKF}(x)$ | 0 | 1 | 1 | 1 | 0 |
| $x^{13}$ mod $G_{KKF}(x)$ | 0 | 0 | 1 | 1 | 1 |
| $x^{14}$ mod $G_{KKF}(x)$ | 1 | 0 | 1 | 1 | 1 |
| $x^{15}$ mod $G_{KKF}(x)$ | 1 | 1 | 1 | 1 | 1 |
| $x^{16}$ mod $G_{KKF}(x)$ | 1 | 1 | 0 | 1 | 1 |
| $x^{17}$ mod $G_{KKF}(x)$ | 1 | 1 | 0 | 0 | 1 |
| $x^{18}$ mod $G_{KKF}(x)$ | 1 | 1 | 0 | 0 | 0 |
| $x^{19}$ mod $G_{KKF}(x)$ | 0 | 1 | 1 | 0 | 0 |
| $x^{20}$ mod $G_{KKF}(x)$ | 0 | 0 | 1 | 1 | 0 |
| $x^{21}$ mod $G_{KKF}(x)$ | 0 | 0 | 0 | 1 | 1 |
| $x^{22}$ mod $G_{KKF}(x)$ | 1 | 0 | 1 | 0 | 1 |
| $x^{23}$ mod $G_{KKF}(x)$ | 1 | 1 | 1 | 1 | 0 |
| $x^{24}$ mod $G_{KKF}(x)$ | 0 | 1 | 1 | 1 | 1 |
| $x^{25}$ mod $G_{KKF}(x)$ | 1 | 0 | 0 | 1 | 1 |
| $x^{26}$ mod $G_{KKF}(x)$ | 1 | 1 | 1 | 0 | 1 |
| $x^{27}$ mod $G_{KKF}(x)$ | 1 | 1 | 0 | 1 | 0 |
| $x^{28}$ mod $G_{KKF}(x)$ | 0 | 1 | 1 | 0 | 1 |
| $x^{29}$ mod $G_{KKF}(x)$ | 1 | 0 | 0 | 1 | 0 |
| $x^{30}$ mod $G_{KKF}(x)$ | 0 | 1 | 0 | 0 | 1 |
| $x^{31}$ mod $G_{KKF}(x)$ | 1 | 0 | 0 | 0 | $0 = x^0$ |

FIG 2

| s | C(x) | | | |
|---|---|---|---|---|
| 0 | 0 0 0 0 1 | 0 0 1 0 1 1 0 0 | 1 1 1 1 1 0 0 0 | 1 1 0 1 1 1 0 1 0 1 |
| 1 | 1 0 0 0 0 | 1 0 0 1 0 1 1 0 | 0 1 1 1 1 1 0 0 | 0 1 1 0 1 1 1 0 1 0 |
| 2 | 0 1 0 0 0 | 0 1 0 0 1 0 1 1 | 0 0 1 1 1 1 1 0 | 0 0 1 1 0 1 1 1 0 1 |
| 3 | 1 0 1 0 0 | 0 0 1 0 0 1 0 1 | 1 0 0 1 1 1 1 1 | 0 0 0 1 1 0 1 1 1 0 |
| 4 | 0 1 0 1 0 | 0 0 0 1 0 0 1 0 | 1 1 0 0 1 1 1 1 | 1 0 0 0 1 1 0 1 1 1 |
| 5 | 1 0 1 0 1 | 0 0 0 0 1 0 0 1 | 0 1 1 0 0 1 1 1 | 1 1 0 0 0 1 1 0 1 1 |
| 6 | 1 1 0 1 0 | 1 0 0 0 0 1 0 0 | 1 0 1 1 0 0 1 1 | 1 1 1 0 0 0 1 1 0 1 |
| 7 | 1 1 1 0 1 | 0 1 0 0 0 0 1 0 | 0 1 0 1 1 0 0 1 | 1 1 1 1 0 0 0 1 1 0 |
| 8 | 0 1 1 1 0 | 1 0 1 0 0 0 0 1 | 0 0 1 0 1 1 0 0 | 1 1 1 1 1 0 0 0 1 1 |
| 9 | 1 0 1 1 1 | 0 1 0 1 0 0 0 0 | 1 0 0 1 0 1 1 0 | 0 1 1 1 1 1 0 0 0 1 |
| 10 | 1 1 0 1 1 | 1 0 1 0 1 0 0 0 | 0 1 0 0 1 0 1 1 | 0 0 1 1 1 1 1 0 0 0 |
| 11 | 0 1 1 0 1 | 1 1 0 1 0 1 0 0 | 0 0 1 0 0 1 0 1 | 1 0 0 1 1 1 1 1 0 0 |
| 12 | 0 0 1 1 0 | 0 1 1 1 0 1 0 1 | 0 0 0 0 1 0 0 1 | 0 1 1 0 0 1 1 1 1 1 |
| 13 | 0 0 0 1 1 | 0 1 1 1 0 1 0 1 | 0 0 0 0 1 0 0 1 | 0 1 1 0 0 1 1 1 1 1 |
| 14 | 1 0 0 0 1 | 1 0 1 1 1 0 1 0 | 1 0 0 0 0 1 0 0 | 1 0 1 1 0 0 1 1 1 1 |
| 15 | 1 1 0 0 0 | 1 1 0 1 1 1 0 1 | 0 1 0 0 0 0 1 0 | 0 1 0 1 1 0 0 1 1 1 |
| 16 | 1 1 1 0 0 | 0 1 1 0 1 1 1 0 | 1 0 1 0 0 0 0 1 | 0 0 1 0 1 1 0 0 1 1 |
| 17 | 1 1 1 1 0 | 0 0 1 1 0 1 1 1 | 0 1 0 1 0 0 0 0 | 1 0 0 1 0 1 1 0 0 1 |
| 18 | 1 1 1 1 1 | 0 0 0 1 1 0 1 1 | 1 0 1 0 1 0 0 0 | 0 1 0 0 1 0 1 1 0 0 |
| 19 | 0 1 1 1 1 | 1 0 0 0 1 1 0 1 | 1 1 0 1 0 1 0 0 | 0 0 1 0 0 1 0 1 1 0 |
| 20 | 0 0 1 1 1 | 1 1 0 0 0 1 1 0 | 1 1 1 0 1 0 1 0 | 0 0 0 1 0 0 1 0 1 1 |
| 21 | 1 0 0 1 1 | 1 1 1 0 0 0 1 1 | 0 1 1 1 0 1 0 1 | 0 0 0 0 1 0 0 1 0 1 |
| 22 | 1 1 0 0 1 | 1 1 1 1 0 0 0 1 | 1 0 1 1 1 0 1 0 | 1 0 0 0 0 1 0 0 1 0 |
| 23 | 0 1 1 0 0 | 1 1 1 1 1 0 0 0 | 1 1 0 1 1 1 0 1 | 0 1 0 0 0 0 1 0 0 1 |
| 24 | 1 0 1 1 0 | 0 1 1 1 1 1 0 0 | 0 1 1 0 1 1 1 0 | 1 0 1 0 0 0 0 1 0 0 |
| 25 | 0 1 0 1 1 | 0 0 1 1 1 1 1 0 | 0 0 1 1 0 1 1 1 | 0 1 0 1 0 0 0 0 1 0 |
| 26 | 0 0 1 0 1 | 1 0 0 1 1 1 1 1 | 0 0 0 1 1 0 1 1 | 1 0 1 0 1 0 0 0 0 1 |
| 27 | 1 0 0 1 0 | 1 1 0 0 1 1 1 1 | 1 0 0 0 1 1 0 1 | 1 1 0 1 0 1 0 0 0 0 |
| 28 | 0 1 0 0 1 | 0 1 1 0 0 1 1 1 | 1 1 0 0 0 1 1 0 | 1 1 1 0 1 0 1 0 0 0 |
| 29 | 0 0 1 0 0 | 1 0 1 1 0 0 1 1 | 1 1 1 0 0 0 1 1 | 0 1 1 1 0 1 0 1 0 0 |
| 30 | 0 0 0 1 0 | 0 1 0 1 1 0 0 1 | 1 1 1 1 0 0 0 1 | 1 0 1 1 1 0 1 0 1 0 |

FIG 3

FIG 4

$$\longleftarrow \quad D_k(x) \quad \longrightarrow$$

| $d_7$ [$x^6$] | $d_6$ [$x^5$] | $d_5$ [$x^4$] | $d_4$ [$x^3$] | $d_3$ [$x^2$] | $d_2$ [$x^1$] | $d_1$ [$x^0$] | Generatorpolynom $G_x(x)$; Zusatz | invertiert |
|---|---|---|---|---|---|---|---|---|
| 0 | 0 | 0 | 0 | 0 | 0 | 0 | $G_3(x)$; a | nein |
| 0 | 1 | 0 | 0 | 0 | 0 | 0 | $G_3(x)$; b | ja |
| 0 | 0 | b | b | b | b | b | $G_1(x)$ | nein |
| 0 | 1 | b | b | b | b | b | $G_1(x)$ | ja |
| 1 | 0 | 0 | 0 | 0 | 0 | 0 | $G_3(x)$; c | nein |
| 1 | 1 | 0 | 0 | 0 | 0 | 0 | $G_3(x)$; d | ja |
| 1 | 0 | b | b | b | b | b | $G_2(x)$ | nein |
| 1 | 1 | b | b | b | b | b | $G_2(x)$ | ja |

FIG 5

47 — 1011010

41
42
43
44
45
46

40

48 — Kodewort

49

FIG 6

50 — Kodewort

| Kreuz-Korrelator 51 | Kreuz-Korrelator 52 | Kreuz-Korrelator 53 |

$KKF_1(n)$    $KKF_2(n)$    $KKF_3(n)$

| Lage des Maximums | Lage des Maximums | Lage des Maximums |

1011010

FIG 7

FIG 8

14